# EUROPEAN PATENT APPLICATION

(11) **EP 4 835 316 A1**
(43) Date of publication of application: **04.11.2026**
(21) Application number: 26164176.5
(22) Date of filing: 12.03.2026
(51) Int. Cl.: F16D 23/12, F16D 13/52

(54) **BRAKING DEVICE, PTO TRANSMISSION UNIT AND WORK MACHINE**

(30) Priority: 30.04.2025 IN 202521041519
(71) Applicant: Deere & Company, Moline, IL 61265 (US)
(72) Inventor: Steiner, Tobias, 68163 Mannheim (DE); Shinde, Pradip, 68163 Mannheim (DE)
(74) Representative: Stein, Stefan

(57) **Abstract**

The invention relates to a braking device (100) for a PTO transmission unit (30), comprising a bearing plate (102), the bearing plate (102) having one or more recesses (106). A ball (108) is arranged and mounted on and/or in each recess (106). The braking device (100) comprises a cone (104), the cone (104), in particular on a side facing the bearing plate (102), having one or more cutouts (112) in the circumferential direction, and the balls (108) being arranged and/or mounted on or in the cutouts (112). The invention furthermore relates to a PTO transmission unit (30) and to a work machine (10).

## Description

### FIELD OF THE INVENTION

The invention relates to a braking device according to the preamble of independent Claim 1, to a PTO transmission unit according to the preamble of independent Claim 8, and to a work machine according to the preamble of independent Claim 15.

Conventionally, PTO transmission units are provided at the front and/or rear end of work machines, in particular agricultural utility vehicles. The PTO transmission units provide power and/or a rotational speed and/or a torque to assemblies or implements which are attached to the work machine and are used in field work. Implements may require different drive torques and drive rotational speeds. For this reason, PTO transmissions which provide different rotational speeds are known. The known PTO transmissions can enable the operating modes of the PTO to be switched over when not under load.

With regard to the various agricultural implements, the nominal rotational speeds of the PTO shafts are nowadays standardized. Nominal rotational speeds of 540 revolutions per minute, 750 revolutions per minute, 1000 revolutions per minute and 1400 revolutions per minute have become established (standard transmission stage). These nominal rotational speeds, also known as gear stages or transmission stages, are present at the output shaft or PTO shaft within the range of the nominal engine rotational speed (maximum power). DE 10 2017 212 639 A1 discloses a PTO transmission unit. A disadvantage here is that the known PTO transmission units have a structurally too complex design, which has a short service life and/or a high degree of wear, for braking the PTO transmission units.

Proceeding from this prior art, it is an object of the present invention to propose a braking device and a PTO transmission unit and a work machine which are improved in comparison to the prior art. In particular, it can be an object of the present invention to propose a braking device and a PTO transmission unit and a work machine which are more simple structurally and/or have a longer service life and/or have less need for maintenance.

This object is achieved by a braking device having the features of Claim 1 and a PTO transmission unit having the features of Claim 8 and a work machine having the features of Claim 15. The dependent claims relate to particularly advantageous embodiments of the invention.

"Connected" can be understood below as preferably mechanically connected and/or mechanically operatively connected and/or connected for conjoint rotation. In particular, "connected" can be understood, additionally or alternatively, as drivably connected, that is, torque-transmittingly and/or rotational speed-transmittingly connected, and/or coupled, that is, in particular mechanically coupled and/or rigidly coupled, and/or coupled for conjoint rotation. "Connectable" can preferably be understood as mechanically connectable and/or mechanically operatively connectable and/or connectable for conjoint rotation. In particular, "connectable" can be understood, additionally or alternatively, as drivably connectable, that is, torque-transmittingly and/or rotational speed-transmittingly connectable, and/or couplable, that is, mechanically couplable and/or rigidly couplable, and/or connectable for conjoint rotation. "Connected" can therefore in particular be understood as a connection of two components which makes it possible to transmit energy and/or force and/or a torque and/or a rotational speed from one component to the other, in particular mechanically. Further components or parts enabling such a transmission of energy and/or force and/or torque and/or transmission of a rotational speed between the two components can be provided between the two components.

According to the invention, a braking device for a PTO transmission unit is proposed. The braking device comprises a bearing plate and a cone. The bearing plate has one or more recesses, in particular two or three or more recesses. A ball is arranged and/or mounted, in particular at least partially, in particular rotatably arranged and/or rotatably mounted, on and/or in each recess. The cone has, in particular on a side facing the bearing plate, one or more cutouts, in particular two or three or more cutouts, in the circumferential direction, in particular along and/or in the direction of the circumferential direction. The balls are arranged and/or mounted, in particular rotatably arranged and/or movably arranged and/or rotatably mounted and/or movably mounted, on and/or in the cutout or the cutouts. In other words, a ball can be in each case arranged and/or mounted, in particular rotatably arranged and/or movably arranged and/or rotatably mounted and/or movably mounted, on and/or in each cutout. In other words, the cone can be arranged and/or mounted rotatably on the bearing plate with or by the arrangement and/or mounting of the balls on and/or in the cutouts. In particular, the cone can be rotatably arranged and/or mounted on the bearing plate by virtue of the balls being arranged and/or mounted, in particular rotatably arranged and/or movably arranged and/or rotatably mounted and/or movably mounted, on and/or in the cutouts. The cone can thus be rotatably arranged and/or mounted on the bearing plate, in particular in the circumferential direction, preferably in both directions, and in particular rotatably arranged and/or rotatably mounted relative to the bearing plate. The cutouts can be in the form of a groove or ball raceway. In particular, each cutout can be assigned precisely one ball.

The bearing plate can be arrangeable for conjoint rotation, preferably in the PTO transmission unit, particularly preferably the bearing plate can be connectable to a transmission housing of the PTO transmission unit. The bearing plate can have two or more recesses, preferably two or three or four recesses. Each ball can be rotationally and/or rotatably arranged and/or mounted in the associated recess. Each ball can be translationally fixedly and/or immovably arranged and/or mounted in the associated recess. The recesses can be in the form, for example, of holes or bores or grooves or countersunk points. The bearing plate can have further recesses, which can be in the form in particular of bores. The bearing plate can be connectable or connected to the transmission housing via or with one or more fastening elements, for example screws or rivets or pins, through the further recesses. The fastening elements can be arranged in the further recesses. In particular, the fastening elements can be inserted through the further recesses, in particular bores or holes. The fastening elements can be connectable or connected to the transmission housing, and in particular be secured, with screw threads.

Alternatively, the cone can have two or more recesses. A ball can be, in particular at least partially, arranged and/or mounted, in particular rotatably arranged and/or rotatably mounted, on and/or in each recess. The bearing plate can, in particular on a side facing the cone, have two or more cutouts in the circumferential direction, in particular along and/or in the direction of the circumferential direction. The balls can be arranged and/or mounted, in particular rotatably arranged and/or movably arranged and/or rotatably mounted and/or movably mounted, on and/or in the cutouts. In other words, the cone can be arranged and/or mounted rotatably on the bearing plate with or by the arrangement and/or mounting of the balls on and/or in the cutouts. In particular, the cone can be rotatably arranged and/or mounted on the bearing plate by virtue of the balls being arranged and/or mounted, in particular rotatably arranged and/or movably arranged and/or rotatably mounted and/or movably mounted, on and/or in the cutouts. The cone can thus be rotatably arranged and/or mounted on the bearing plate, in particular in the circumferential direction, preferably in both directions, and in particular rotatably arranged and/or rotatably mounted relative to the bearing plate. Thus, the same effect according to the invention can be achieved.

Alternatively, the cone can have one or more recesses and the bearing plate can have one or more recesses. The bearing plate can, in particular on a side facing the cone, have one or more cutouts in the circumferential direction, in particular along and/or in the direction of the circumferential direction, and the cone can, in particular on a side facing the bearing plate, have one or more cutouts in the circumferential direction, in particular along and/or in the direction of the circumferential direction. Thus, the same effect according to the invention can be achieved. Advantageously, flexibility, in particular a slight movement or bending in the axis of rotation, can thereby be achieved in the rotation of the cone. In addition, the gradual rotation of the cone prevents and/or reduces the risk of sudden shocks.

In a refinement of the invention, the cone and the bearing plate are arranged coaxially to each other. In addition, the cone and the bearing plate can be oriented coaxially to each other. The cone and/or the bearing plate can be annular and/or hollow-cylindrical. The cone and/or the bearing plate can be oriented and/or arranged along and/or in the direction of an axis A, in particular a common axis. The cone and/or the bearing plate can be arranged concentrically and/or coaxially to the axis A. The cone can be rotatably arranged and/or mounted about the axis A. The braking device has the advantages mentioned above.

In a refinement of the invention, the cone is, in particular only, rotatable in a first angular range a with respect to the bearing plate. In other words, the cone can be rotatably arranged and/or mounted on and/or with respect to the bearing plate, in particular only, in the first angular range a with or by the arrangement and/or mounting of the balls on and/or in the cutouts. In particular, the cone can be rotatably arranged and/or mounted on and/or with respect to the bearing plate, preferably only, in the first angular range a by virtue of the balls being arranged and/or mounted, in particular rotatably arranged and/or movably arranged and/or rotatably mounted and/or movably mounted, on and/or in the cutouts. The cone can thus be rotatably arranged and/or mounted on the bearing plate, in particular in the circumferential direction, and in particular rotatably arranged and/or rotatably mounted relative to the bearing plate. The first angular range a can be an angular interval or the value of an angle. The first angular range can be less than or equal to 170 degrees, preferably less than or equal to 150 degrees, particularly preferably less than or equal to 130 degrees. In particular, the first angular range can be less than or equal to 110 degrees. The braking device has the advantages mentioned above.

In a refinement of the invention, each cutout extends in the circumferential direction with a and/or in a second angular range b, in particular along and/or in the direction of the circumferential direction. The cutouts can be arranged along the circumference U of a circle having a radius R, in particular a fixed radius. Each cutout can extend in the circumferential direction with the and/or in the second angular range b, in particular along a partial circumference of the circle on which the cutouts are arranged. The cutouts can be arranged coaxially and/or concentrically to the axis A and/or an output shaft of the PTO transmission unit. The cutouts can be spaced and/or arranged with respect to the axis A and/or the output shaft with the same radius R. The cutouts can be spaced with respect to one another along the circumference of the circle with the radius R and have the second angular range.

The second angular range can be an angular interval or the value of an angle. The second angular range can be larger than the first angular range. The second angular range can be less than or equal to 180 degrees, preferably less than or equal to 160 degrees, particularly preferably less than or equal to 140 degrees. In particular, the second angular range can be less than or equal to 120 or 130 degrees. The length of the cutout can be less than or equal to 50%, preferably less than or equal to 45%, particularly preferably less than or equal to 40%, of the circumference U of the circle with the radius R, on which the cutouts can be arranged. In particular, the length of the cutout can be less than or equal to 30% or 35% of the circumference U of the circle with the radius R, on which the cutouts can be arranged. The braking device has the advantages mentioned above.

In a refinement of the invention, each ball is, preferably completely, arranged in the associated cutout and/or is movable and/or rotatable and/or rollable along and/or in the direction of the circumferential direction in the cutout. In particular, each ball can be, preferably completely, arranged in the associated cutout and can be movable and/or rotatable and/or rollable along and/or in the direction of the circumferential direction in the second angular range in the cutout. The diameter of each ball can be smaller than a width of each cutout. Each ball can be accommodated in the associated cutout. This can advantageously prevent distortion.

In a refinement of the invention, a depth of the or each cutout decreases outside the first angular range but within the second angular range in comparison to the depth in the first angular range, and/or a width of the or each cutout decreases outside the first angular range but within the second angular range in comparison to the width in the first angular range. In the first angular range a, the depth and/or width can be greater than in the second angular range. If the ball moves and/or rotates and/or rolls in the region of decreasing depth and/or width, the distance between the bearing plate and the cone changes. Alternatively, the ball can strike against an edge and/or an end of the cutout in the region of decreasing depth and/or width. The edge and/or the end of the cutout, i.e. the region of decreasing depth and/or width, can be designed as a stop for the ball. This can advantageously achieve a slower rotational movement and/or deceleration between the bearing plate and the cone, thereby reducing wear and the need for maintenance and improving the service life of the braking device.

The invention furthermore relates to a PTO transmission unit for a work machine, comprising a braking device or having a braking device, in particular according to at least one of Claims 1 to 7. The PTO transmission unit can comprise an input shaft, which is connectable to a work machine, and/or an output shaft. The PTO transmission unit can transmit power between the input shaft and an output shaft.

In a refinement of the invention, the PTO transmission unit comprises the output shaft and a transmission housing. The bearing plate is connected to the transmission housing. The cone is rotatably arranged, and in particular axially movably or displaceably arranged, in the transmission housing and, in particular rotatably, arranged and/or mounted on the bearing plate. The PTO transmission unit furthermore comprises a hub and a piston and a spring element and a clutch pack. The hub and the piston are connected to the output shaft. The piston, in particular with a form fit, can be connected to the output shaft. The spring element is arranged between the piston and the hub. The spring element can be, for example, a spring, in particular a disc spring or a helical spring. The piston is configured to exert a force on the clutch pack and engage the clutch pack, in particular to move and/or to bring same into an engaged position, when the piston is in a first position and/or is moved. The braking device, in particular the cone, is configured to brake and/or stop a movement and/or rotation of the piston when the piston is in a second position and/or is moved, in particular by the cone being, preferably only, rotatable in the first angular range a with respect to the bearing plate, such that a rotation and/or turning of the cone and/or the output shaft is braked and/or stopped.

The piston can be configured, when the piston is in the second position, not to exert any force on the clutch pack and to bring the clutch pack out of engagement, i.e. in particular to move same into a disengaged position. In the first position of the piston, the cone and the piston cannot have a force fit, i.e. in particular can be detached from each other. In the first position of the piston, since the cone and the piston do not have a force fit, the piston and/or the output shaft can be rotatable, in particular freely rotatable. In the second position of the piston, the cone and the piston can be connected with a force fit. When the cone and the piston are connected to each other with a force fit, the braking device, in particular the cone, can be configured to brake and/or stop a movement and/or rotation of the piston, when the piston is in a second position and/or is moved, in particular by the cone being, preferably only, rotatable in the first angular range with respect to the bearing plate, such that a rotation and/or turning of the cone and/or the output shaft is braked and/or stopped. In the second position of the piston, since the cone and the piston are connected to each other with a force fit, the cone can be, in particular only, rotatable in the first angular range with respect to the bearing plate, such that a rotation of the piston and/or the output shaft is braked and/or stopped. In the second position of the piston, since the cone and the piston have a force fit, the cone can be, in particular only, rotatable in the first angular range a with respect to the bearing plate, such that a rotation of the piston and/or the output shaft, in particular in the first angular range a, is braked and/or stopped.

The clutch pack can be arranged in the housing. The clutch pack can be formed and/or arranged radially symmetrically. The clutch pack can be designed for the optional transmission of energy and/or force and/or a torque and/or a rotational speed between the input shaft and the output shaft. In other words, either energy and/or force and/or a torque and/or a rotational speed can be transmissible from the input shaft to the output shaft by means of the clutch pack. The clutch pack can be in engagement or out of engagement. The clutch pack can be movable, in particular movable to and fro, between a disengaged position, i.e. out of engagement, and the engaged position, i.e. in engagement. The clutch pack can connect the input shaft to the output shaft when the clutch pack is in engagement and/or in the engaged position, and in particular transmit energy and/or force and/or a torque and/or a rotational speed between the input shaft and the output shaft. In particular, the clutch pack can be configured to connect the input shaft to the output shaft when the clutch pack is in engagement and/or in the engaged position, and in particular transmit energy and/or force and/or a torque and/or a rotational speed between the input shaft and the output shaft. The clutch pack cannot connect the input shaft to the output shaft, i.e. in particular can release a connection of the input shaft to the output shaft, when the clutch pack is out of engagement and/or in the disengaged position, and in particular cannot transmit energy and/or force and/or any torque and/or any rotational speed between the input shaft and the output shaft. In particular, the clutch pack can be configured not to connect the input shaft to the output shaft, i.e. in particular to release a connection of the input shaft to the output shaft, when the clutch pack is out of engagement and/or in the disengaged position, and in particular cannot transmit energy and/or force and/or any torque and/or any rotational speed between the input shaft and the output shaft.

Advantageously, a structurally simple configuration of the PTO transmission unit, in particular also of the braking device, can thereby be achieved. The design allows for slight movement or bending of the output shaft, which facilitates, for example, a rotational orientation of the PTO shaft on the attachment. In addition, it can be of advantage to reduce the wear and outlay on maintenance of the PTO transmission unit. Less outlay on maintenance is required because of the design and the reduced friction points. The PTO transmission unit, in particular the braking device, reduces the risk of sudden shocks. The service life and/or longevity of the PTO transmission unit, in particular of the braking device, is also increased.

In a refinement of the invention, the PTO transmission unit comprises a counter plate. A chamber is formed, in particular at least partially, between the counter plate and the piston. The chamber can be selectively pressurized, in particular with a fluid. In particular, the PTO transmission unit, in particular the chamber, can be configured to selectively pressurize the chamber, in particular to move the piston into the first position. In other words, the PTO transmission unit can be configured to move the piston into the first position and the piston to exert a force on the clutch pack and bring the clutch pack into engagement, in particular to move same into the engaged position when the chamber is and/or has been pressurized.

The PTO transmission unit can be configured to move the piston into the second position when the chamber is not pressurized or is free of pressure. The braking device, in particular the cone, can be configured to brake and/or stop a movement and/or rotation of the piston when the piston is in a second position and/or is moved, in particular by the cone being, preferably only, rotatable in the first angular range with respect to the bearing plate, such that a rotation and/or turning of the cone and/or the output shaft is braked and/or stopped. In particular, the PTO transmission unit can be configured to move the piston into the first position when the chamber is pressurized, and the piston can be configured to exert a force on the clutch pack and to bring the clutch pack into engagement when the chamber is pressurized. In addition, the PTO transmission unit, in particular the spring element, can be configured to move the piston into the second position when the chamber is not pressurized or is free of pressure. The braking device, in particular the cone, can be configured to brake and/or stop a movement and/or rotation of the piston when the piston is in a second position and/or is moved, in particular by the cone being, preferably only, rotatable in the first angular range with respect to the bearing plate, such that a rotation and/or turning of the cone and/or the output shaft is braked and/or stopped. The fluid can be a liquid or a gas. The chamber can be coupled to a liquid or gas source to fill the chamber with the fluid. The PTO transmission unit has the advantages mentioned above.

In a refinement of the invention, the spring element preloads the piston. The spring element can be mounted and/or arranged, in particular supported, on the hub and/or the piston. The piston can be movable with the spring element in the direction of the cone, in particular can be movable in the axial direction, such that the piston and the cone are connected with a force fit. The spring element can, in particular permanently, exert a force on the piston such that the piston can be preloaded. The spring element can be arranged and/or mounted, in particular tensioned or preloaded, between the piston and the hub. In other words, the spring element can be configured to move the piston into the second position such that the piston and the cone are connected with a force fit, in particular when the chamber is not pressurized or is free of pressure. The cone can be centred at or on the piston when the piston is in the second position. In addition, the cone can be centred with respect to the bearing plate by means of the balls. The bearing plate, in turn, can be centred with respect to the axis A. The PTO transmission unit has the advantages mentioned above.

In a refinement of the invention, the bearing plate is designed as part of the transmission housing. The bearing plate and the transmission housing can be integrally formed. By this means, a structurally simple design can advantageously be achieved.

In a refinement of the invention, the bearing plate and the cone are arranged, and in particular mounted, coaxially to the output shaft The cone and the bearing plate can be arranged coaxially to each other. In addition, the cone and the bearing plate can be oriented coaxially to each other. The cone and/or the bearing plate can be annular and/or hollow-cylindrical. The cone and/or the bearing plate can be oriented and/or arranged along and/or in the direction of the output shaft. The cone and/or the bearing plate can be arranged concentrically and/or coaxially to the output shaft. The cone can be rotatably arranged and/or mounted with the output shaft about the axis A. The PTO transmission unit has the advantages mentioned above.

In a refinement of the invention, the clutch pack is in the form of a multi-disc clutch arrangement, preferably a wet-running or dry multi-disc clutch arrangement. The clutch pack can be in the form of a multi-disc clutch arrangement, preferably a wet-running or dry multi-disc clutch arrangement. The clutch pack, in particular the multi-disc clutch arrangement, can comprise one or more clutch discs or friction discs. The clutch disc or friction disc, in particular each clutch disc or friction disc, can comprise one or more friction linings. The clutch disc or friction disc, in particular each clutch disc or friction disc, can be connected to the input shaft or output shaft, preferably to an input or output disc carrier, preferably connected for conjoint rotation and/or with a form fit. The clutch pack, in particular the multi-disc clutch arrangement, can comprise one or more separating discs or plates. The clutch pack, in particular the multi-disc clutch arrangement, can comprise at least two separating discs or plates.

In each case at least one separating disc or plate can be arranged on the one side and on the other side of the clutch disc or friction disc. The separating disc or plate, in particular each separating disc or plate, can be connected to the input shaft or output shaft, preferably to the input or output disc carrier, preferably connected for conjoint rotation and/or with a form fit.

Either all of the clutch discs or friction discs can be connected to the input shaft, preferably to the input disc carrier, preferably connected for conjoint rotation and/or with a form fit, and all of the separating discs or plates can be connected to the output shaft, preferably to the output disc carrier, preferably connected for conjoint rotation and/or with a form fit, or vice versa.

For example, the input shaft can comprise the input disc carrier and/or can be connected thereto. For example, the input disc carrier can be formed as part of the input shaft. For example, the output shaft can comprise the output disc carrier and/or can be connected thereto. For example, the output disc carrier can be formed as part of the output shaft. The hub can comprise the output disc carrier and/or can at least partially be formed as the latter.

The clutch pack can be movable between the disengaged position and the engaged position, in particular can be movable to and fro. In particular, in the first position, the piston can move the clutch pack into the engaged position. The piston can therefore be configured to move the clutch pack into the engaged position. In the engaged position, the piston can exert a force on the plates or separating discs and/or the friction linings. In the engaged position, the piston can compress or clamp the plates or separating discs and/or the friction linings, in particular in such a way that energy and/or force and/or a torque and/or a rotational speed can be transmitted between the input disc carrier and an output disc carrier.

The invention furthermore relates to a work machine having a PTO transmission unit, in particular according to one of Claims 8 to 14. The work machine can be a construction machine or a towing vehicle, preferably an agricultural towing vehicle, for example a tractor. The work machine has the above-described advantages.

The work machine can comprise a drive unit. The work machine can be drivable with a rotational speed and/or force and/or a torque of a drive unit. The drive unit can be connectable or connected to the input shaft. The drive unit can be, for example, an internal combustion engine or an electric motor. The work machine can comprise the one or more ground-engaging means. The ground-engaging means can support and/or carry the work machine on the ground. The ground-engaging means can be wheels or tracks or chains. In particular, the ground-engaging means can be front wheels and rear wheels.

The invention and other advantages and advantageous developments and refinements of the invention, both in terms of hardware and in terms of method, will be explained in greater detail below on the basis of exemplary embodiments and with reference to the drawing. Components of equivalent or comparable function are identified here by the same reference signs. In the drawings:
- Fig. 1: shows a schematic illustration of a first exemplary embodiment of a work machine according to the invention, and
- Fig. 2: shows a schematic illustration of a first exemplary embodiment of the braking device according to the invention, and
- Fig. 3: shows another schematic illustration of the first exemplary embodiment of the braking device according to the invention, and
- Fig. 4: shows a schematic illustration of a second exemplary embodiment of the braking device according to the invention, and
- Fig. 5: shows another schematic illustration of a second exemplary embodiment of the braking device according to the invention, and
- Fig. 6: shows a schematic illustration of a first exemplary embodiment of the PTO transmission unit according to the invention, and
- Fig. 7: shows another schematic illustration of the first exemplary embodiment of the PTO transmission unit according to the invention, and
- Fig. 8: shows a schematic illustration of a second exemplary embodiment of the PTO transmission unit according to the invention, and
- Fig. 9: shows a schematic illustration of a cutout and a ball.

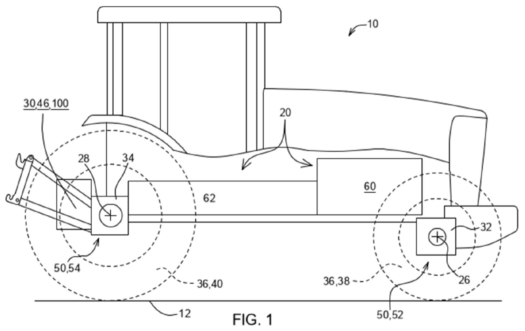

Figure 1 shows a schematic illustration of a first exemplary embodiment of a work machine 10 according to the invention, here of an agricultural towing vehicle or tractor, in particular having a braking device 100 and PTO transmission unit 30 according to the invention. The work machine 10 comprises a drive train 20 according to the invention. In addition, the work machine 10 is drivable by the drive train 20.

The work machine 10, in particular the drive train 20, comprises a first vehicle axle 26 and a second vehicle axle 28. The first vehicle axle 26 can be a front axle, and the second vehicle axle 28 can be a rear axle. Moreover, the first vehicle axle 26 can be embodied as a steerable axle. The work machine 10, in particular the drive device 20, can comprise a traction drive 50, in particular a front-axle drive 52 and a rear-axle drive 54. The work machine 10 can have one or more ground-engaging means 36, in this case illustrated in the form of wheels 38, 40, which engage with an underlying surface 12 in order to transmit drive forces and/or by way of which the work machine 10 is supported on the underlying surface 12. Alternatively, the ground-engaging means 36 can also be configured and arranged as tracks or chains.

The traction drive 50 can comprise the first vehicle axle 26 and/or the second vehicle axle 28 and/or a first differential 32 and/or a second differential 34 and/or the one or more ground-engaging means 36. The first vehicle axle 26 can be connected to the first differential 32. The second vehicle axle 28 can be connected to the second differential 34.

The work machine 10, in particular the drive train 20, comprises a drive unit 60 and a transmission 62. With the drive train 20, in particular the drive unit 60, a rotational movement and/or force and/or a torque and/or a rotational speed can be generatable and can be transmissible, in particular via the transmission 62, to the first and/or second vehicle axle 26, 28. The first and/or second vehicle axle 26, 28 convert the rotational movement and/or force and/or the torque and/or the rotational speed into a rotational movement and/or force and/or torque and/or rotational speed of one or more ground-engaging means 36, and thus into propulsion of the work machine 10.

The work machine 10, in particular the drive train 20, can comprise a first power output 46. The first power output can comprise the PTO transmission unit 30. The first power output 46, in particular PTO transmission unit, can be provided for the purpose of driving an implement (not shown), which is attachable to the work machine 10 via an interface (e.g. three-point interface).

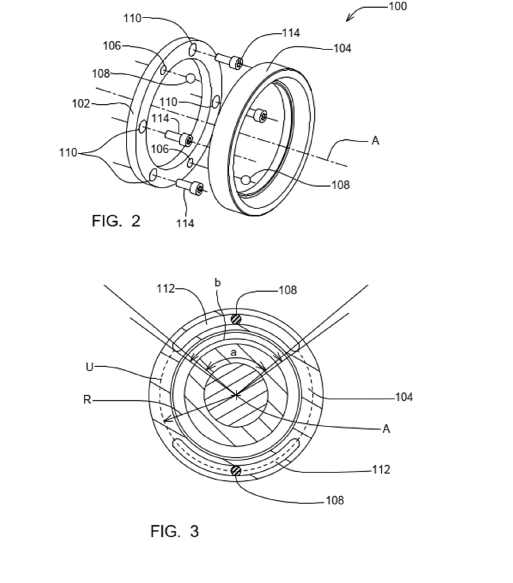

Figure 2 shows a schematic illustration of a first exemplary embodiment of the braking device 100 according to the invention. The braking device 100 shown in Figure 2 substantially corresponds to the braking device 100 shown in Figure 1, and therefore only details and/or points of differentiation will be discussed below. The work machine 10 illustrated in Figure 1 can comprise the braking device 100 illustrated in Figure 2.

The braking device 100 for a PTO transmission unit 30 comprises a bearing plate 102 and a cone 104 and one or two or more balls 108. The braking device 100 according to Figures 2 and 3 comprises two cutouts 112 and two balls 108. The bearing plate 102 can be arranged for conjoint rotation, in particular can be connectable to a transmission housing 204. In addition, the bearing plate 102 has one or more recesses 106, in the present case precisely two recesses. A ball 108 is, in particular completely, arranged and mounted, in particular is turnably and/or rotatably and/or translationally immovably arranged and mounted, on and/or in each recess 106. The recesses 106 can be in the form, for example, of holes or bores or grooves. The bearing plate 102 can have further recesses 110, which can be in the form in particular of bores. The bearing plate 102 can be connectable or connected to the transmission housing 204 via or with one or more fastening elements 114, for example screws in the present case.

The cone 104 has, in particular on a side facing the bearing plate 102, one or more, here two, cutouts 112 (see Figure 3) in the circumferential direction, in particular along and/or in the direction of the circumferential direction. The balls 108 are movably and/or rotatably arranged or arrangeable and/or mounted or mountable on or in the cutouts 112. The cutouts 112 can be in the form of a groove or ball raceway. In particular, each cutout 112 can be assigned precisely one ball 108.

The cone 104 can be rotatably arranged and mounted on the bearing plate 102. In addition, the cone 104 can be rotatable relative to the bearing plate 102. In particular, the cone 104 can be movably or rotatably arranged and/or mounted, in particular in the circumferential direction, on the bearing plate 102. In other words, the cone 104 can be rotatably arranged and/or mounted on the bearing plate 102 with or by the arrangement and/or mounting of the balls 108 on and/or in the cutouts 112.

The cone 104 and/or the bearing plate 102 can be annular. In addition, the cone 104 and the bearing plate 102 can be arranged and/or oriented coaxially to each other. The cone 104 and/or the bearing plate 102 can be oriented and/or arranged along and/or in the direction of an axis A, in particular a common axis. The bearing plate 102 can be arranged concentrically and/or coaxially to the axis A. The cone 104 can be rotatably arranged and/or mounted about the axis A.

Figure 3 shows another schematic illustration of the first exemplary embodiment of the braking device 100 according to the invention. The braking device 100 shown in Figure 3 substantially corresponds to the braking device 100 shown in Figures 1 and 2, and therefore only details and/or points of differentiation will be discussed below. The work machine 10 illustrated in Figure 1 or the drive train 20 can comprise the braking device 100 illustrated in Figure 3.

The cone 104 can be, in particular only, rotatable in a first angular range a with respect to the bearing plate 102. In other words, the cone 104 can be rotatably arranged and/or mounted on the bearing plate 102 with or by means of the arrangement and/or mounting of the balls 108 on and/or in the cutouts 112, in particular can be rotatable only in the first angular range a with respect to the bearing plate 102.

The cutouts 112 can be arranged along the circumference U of a circle having the radius R. Each cutout 112 can extend in a second angular range b in the circumferential direction. Each cutout can extend in the circumferential direction in the second angular range b, in particular along a partial circumference of the circle on which the cutouts are arranged, in particular along and/or in the direction of the circumferential direction. The cutouts 112 can be arranged coaxially and/or concentrically to the axis A and/or an output shaft 202. The cutouts 112 can be spaced and/or arranged with respect to the axis A and/or the output shaft 202 with the same radius R. Each ball 108 can be arranged, in particular completely, in the associated cutout 112 and movable along and/or in the direction of the circumferential direction in the cutout 112. In particular, each ball 108 can be arranged, in particular completely, in the associated cutout 112. Each ball 108 can be movable along and/or in the direction of the circumferential direction in the second angular range b in the cutout 112.

A depth T of each cutout 112 outside the first angular range a but within the second angular range b can decrease and/or a width B of each cutout 112 outside the first angular range a but within the second angular range b can decrease. As a result, the distance between the bearing plate 102 and the cone 104 can change when the cone is rotated or strikes against the edge of the cutout.

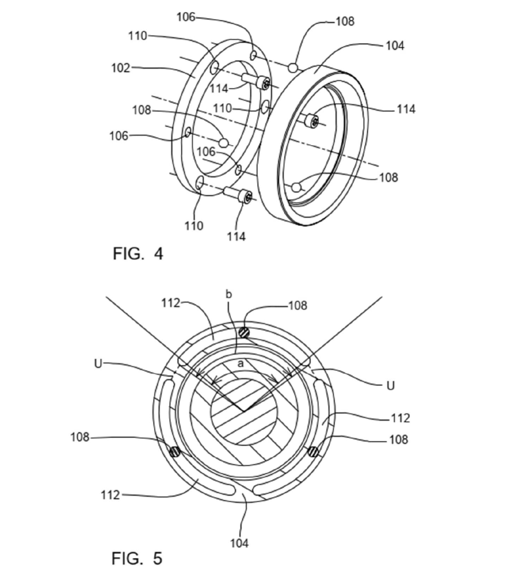

Figures 4 and 5 show a schematic illustration of a second exemplary embodiment of the braking device 100 according to the invention. The braking device 100 shown in Figures 4 and 5 substantially corresponds to the braking device 100 shown in Figures 1 to 3, and therefore only details and/or points of differentiation will be discussed below. The work machine 10 illustrated in Figure 1 or the drive train 20 can comprise the drive braking device 100 illustrated in Figures 4 and 5. The braking device 100 shown in Figures 4 and 5 has three recesses 106 and three cutouts 112. Unlike the braking device 100 shown in Figures 2 and 3, the cutouts 112 shown in Figures 4 and 5 have a constant depth over the entire length of the cutout 112 but a decreasing width outside the first angular range a but within the second angular range b. A movement of the balls 108 can be stopped by or with the edges or ends of the cutout 112.

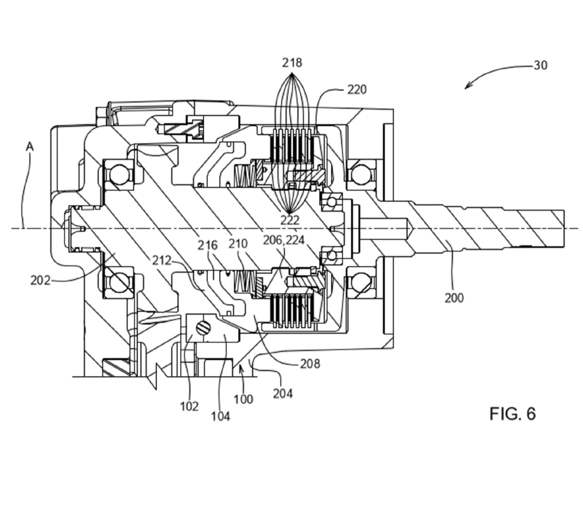

Figure 6 shows a schematic illustration of a first exemplary embodiment of the PTO transmission unit 30 according to the invention. The PTO transmission unit 30 shown in Figure 6 substantially corresponds to the PTO transmission unit 30 shown in Figures 1 to 5, and therefore only details and/or points of differentiation will be discussed below. The PTO transmission unit 30 shown in Figure 6 can comprise the braking device 100 shown in Figures 1 to 5, and therefore only details and/or points of differentiation will be discussed below. The work machine 10 illustrated in Figure 1 or the drive train 20 can comprise the PTO transmission unit 30 illustrated in Figure 6.

The PTO transmission unit 30 for the work machine 10 comprises the braking device 100. The PTO transmission unit comprises an input shaft 200 and an output shaft 202 and the transmission housing 204. With the PTO transmission unit 30, a rotational speed and/or a torque and/or a power can be transmissible or transmitted between an input shaft 200, which is in particular connectable or connected to the work machine 10, and an output shaft 202.

The bearing plate 102 is connected to the transmission housing 204. The cone 104 is rotatably arranged and/or mounted on the bearing plate 102, in particular about the axis A, and axially movably in the transmission housing 204. The PTO transmission unit 30 furthermore comprises a hub 206 and a piston 208 and a spring element 210 and a counter plate 212 and a clutch pack 214. The hub 206 and the piston 208 are connected to the output shaft 202, in particular the piston can be connected to the output shaft 202 with a form fit. The spring element 210 is arranged between the piston 208 and the hub 206. The piston 208 is configured to exert a force on the clutch pack 214 and engage the clutch pack 214, that is, in particular to move same into the engaged position when the piston 208 is in a first position. Figure 6 shows the piston 208 in the first position. The braking device 100, in particular the cone 104, is configured to brake and/or stop a rotation of the piston 208 when the piston 208 is in a second position, and, in particular, the cone 104 is, preferably only, rotatable in the first angular range a with respect to the bearing plate 102, such that a rotation of the piston 208 and/or the output shaft 202 is braked and/or stopped.

The PTO transmission unit 30 can comprise a counter plate 212. A chamber 216 is formed between the counter plate 212 and the piston 208. The chamber 216 is selectively pressurized, in particular with a fluid which may be gaseous or liquid. The spring element 210 preloads the piston 208. The spring element is mounted and/or supported on the hub 206. The piston 208 is movable with the spring element 210 in the direction of the cone 104, and/or in particular into the second position, such that the piston 208 and the cone 104 are connected with a force fit. In other words, the spring element 210 is configured to move the piston 208 into the second position, such that the piston 208 and the cone 104 are connected with a force fit. The PTO transmission unit 30, in particular the spring element 210, can thus be configured to move the piston 208 into the second position. The bearing plate 102 and the cone 104 are arranged coaxially to the output shaft 202. The cone 104 and the bearing plate 102 are arranged along and/or in the direction of the output shaft 202, and in particular the axis A. The cone 104 is rotatably arranged and/or mounted about the output shaft 202, and in particular the axis A.

The clutch pack 214 is in the form of a multi-disc clutch arrangement. The clutch pack 214 comprises a plurality of friction discs 218 which are provided with friction linings. The input shaft 200 comprises the input disc carrier 220, which is formed as part of the input shaft 200. The friction discs 218 are connected to the input disc carrier 220, in particular connected for conjoint rotation. The clutch pack 214 also comprises a plurality of separating discs 222, which are each arranged on the one or the other side of the friction discs 218 and connected to the output disc carrier 224, in particular connected for conjoint rotation. In the present case, the output shaft 202 comprises the hub 206, or the hub 206 is formed as part of the output shaft 202. In addition, the hub 206 comprises the output disc carrier 224, or the output disc carrier 224 is formed as part of the hub 206. The clutch pack can be movable between the disengaged position and the engaged position.

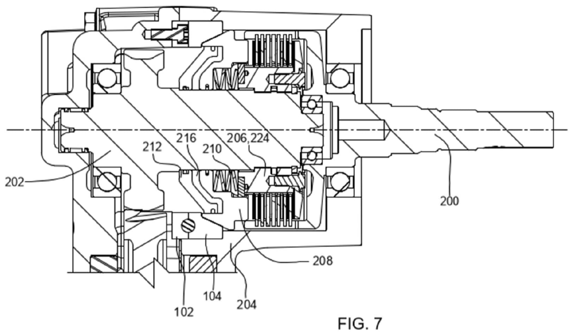

Figure 7 shows another schematic illustration of the first exemplary embodiment of the PTO transmission unit 30 according to the invention. The PTO transmission unit 30 shown in Figure 7 substantially corresponds to the PTO transmission unit 30 shown in Figures 1 to 6, and therefore only details and/or points of differentiation will be discussed below. The PTO transmission unit 30 shown in Figure 7 can comprise the braking device 100 shown in Figures 1 to 6, and therefore only details and/or points of differentiation will be discussed below. The work machine 10 illustrated in Figure 1 or the drive train 20 can comprise the PTO transmission unit 30 illustrated in Figure 7. Figure 7 shows the piston 208 in the second position.

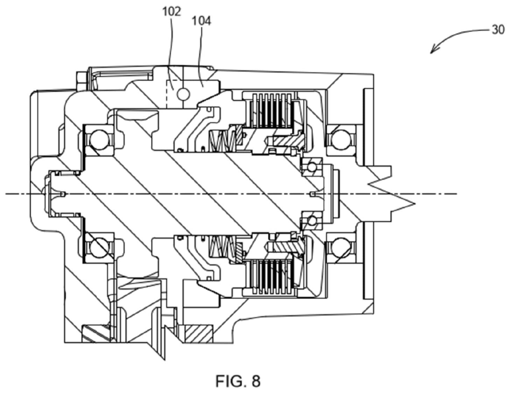

Figure 8 shows a schematic illustration of a second exemplary embodiment of the PTO transmission unit 30 according to the invention. The PTO transmission unit 30 shown in Figure 8 substantially corresponds to the PTO transmission unit 30 shown in Figures 1 to 7, and therefore only details and/or points of differentiation will be discussed below. The PTO transmission unit 30 shown in Figure 8 can comprise the braking device 100 shown in Figures 1 to 7, and therefore only details and/or points of differentiation will be discussed below. The work machine 10 illustrated in Figure 1 or the drive train 20 can comprise the PTO transmission unit 30 illustrated in Figure 8. In contrast to the PTO transmission unit 30 shown in Figures 6 and 7, the bearing plate 102 is formed as part of the transmission housing 204.

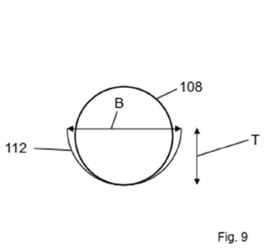

Figure 9 shows a detailed schematic illustration of the cutout 112 and the ball 108. The illustration of the cutout 112 and the ball 108 shown in Figure 9 substantially corresponds to the illustration of the cutout 112 and the ball 108 shown in Figures 1 to 8, and therefore only details and/or points of differentiation will be discussed below. Figure 9 shows the depth T and width B of the cutout 112. The width B of the cutout 112 can be greater than the diameter of the ball 108. A slightly wider cutout 112 allows the cone to be oriented coaxially to the piston 208.

## Claims

1. Braking device for a PTO transmission unit (30), comprising a bearing plate (102), the bearing plate (102) having one or more recesses (106), and a ball (108) being arranged and mounted on and/or in each recess (106), and a cone (104), the cone (104), in particular on a side facing the bearing plate (102), having one or more cutouts (112) in the circumferential direction, and the balls (108) being arranged and/or mounted on or in the cutouts (112).

2. Braking device according to Claim 1, **characterized in that** the cone (104) and the bearing plate (102) are arranged coaxially to each other.

3. Braking device according to Claim 1 or 2, **characterized in that** the cone (104) is, in particular only, rotatable in a first angular range (a) with respect to the bearing plate (102).

4. Braking device according to at least one of the preceding claims, **characterized in that** each cutout (112) extends in the circumferential direction in a second angular range (b).

5. Braking device according to at least one of the preceding claims, **characterized in that** each ball (108) is arranged in the associated cutout (112) and is movable in the cutout (112) along and/or in the direction of the circumferential direction.

6. Braking device according to at least one of the preceding claims, **characterized in that** a depth (T) of each cutout (112) decreases outside the first angular range (a) but within the second angular range (b), and/or a width (B) of each cutout (112) decreases outside the first angular range (a) but within the second angular range (b).

7. Braking device according to at least one of the preceding claims, **characterized in that** the cone (104) and/or the bearing plate (102) are annular.

8. PTO transmission unit for a work machine (10), having a braking device (100) according to one of Claims 1 to 7.

9. PTO transmission unit according to Claim 8, **characterized in that** the PTO transmission unit (30) comprises an output shaft (202) and a transmission housing (204), wherein the bearing plate (102) is connected to the transmission housing (204), and the cone (104) is rotatably arranged in the transmission housing (204) and arranged and mounted on the bearing plate (102), wherein the PTO transmission unit (30) furthermore comprises a hub (206) and a piston (208) and a spring element (210) and a clutch pack (214), and the hub (206) and the piston (208), in particular the piston with a form fit, are connected to the output shaft (202), and the spring element 214 is arranged between the piston (208) and the hub (206), and the piston (208) is configured to exert a force on the clutch pack (214) and engage the clutch pack (214) when the piston (208) is in a first position, and the braking device (100) is configured to brake and/or stop a movement or rotation of the piston (208) when the piston (208) is in a second position.

10. PTO transmission unit according to Claim 8 or 9, **characterized in that** the PTO transmission unit (30) comprises a counter plate (212), and a chamber (216) is formed, in particular at least partially, between the counter plate (212) and the piston (208), and the chamber (216) can be selectively pressurized.

11. PTO transmission unit according to one of Claims 8 to 10, **characterized in that** the spring element (210) preloads the piston (208), and/or the spring element (210) is mounted and/or is arranged on the hub (206), and/or the piston (208) is movable with the spring element (210) in the direction of the cone (104) such that the piston (208) and the cone (104) are connected with a force fit.

12. PTO transmission unit according to one of Claims 8 to 11, **characterized in that** the bearing plate (102) is designed as part of the transmission housing (204).

13. PTO transmission unit according to one of Claims 8 to 12, **characterized in that** the bearing plate (102) and the cone (104) are arranged (concentrically) coaxially to the output shaft (202).

14. PTO transmission unit according to one of Claims 8 to 13, **characterized in that** the clutch pack (214) is in the form of a multi-disc clutch arrangement, preferably a wet-running or dry multi-disc clutch arrangement.

15. Work machine having a PTO transmission unit (30) according to one of Claims 8 to 14.
